# EUROPEAN PATENT SPECIFICATION

(11) **EP 2 680 499 B1**
(45) Date of publication and mention of the grant of the patent: **11.07.2018**
(21) Application number: 13174375.9
(22) Date of filing: 28.06.2013
(51) Int. Cl.: H04L 12/28, H04Q 11/00, H04J 14/02

(54) **Data distribution apparatus and method for multiple services**
Datenverteilungsvorrichtung und Verfahren für mehrere Dienste
Procédé et appareil de distribution de données pour de multiples services

(30) Priority: 28.06.2012 GB 201211468
(43) Date of publication of application: 01.01.2014
(73) Proprietor: Global InvaCom Ltd, Caxton Way, Potters Lane Stevenage Hertfordshire SG1 2UG (GB)
(72) Inventor: Stafford, Gary, Stevenage, Hertfordshire SG1 2UG (GB)
(74) Representative: Stephenson, Philip

(56) References cited:
- EP-A2- 1 608 106
- US-A1- 2003 081 619
- AHN J-G ET AL: "Fiber-to-the-Home Services Based on Wavelength-Division-Multiplexing Passive Optical Network", JOURNAL OF LIGHTWAVE TECHNOLOGY, IEEE SERVICE CENTER, NEW YORK, NY, US, vol. 22, no. 11, 1 November 2004 (2004-11-01), pages 2582-2591, XP011121526, ISSN: 0733-8724, DOI: 10.1109/JLT.2004.834504

## Description

The invention to which this application relates is an improvement in the distribution of data for a plurality of services such as video and/or audio data signals for television services, data signals for telephone and /or Ethernet/broadband services and the provision thereof to one or a plurality of premises and/or the delivery of the same to one or a plurality of locations in each of the premises.

The provision of data signals for services to a premises and/or locations can be achieved in a number of different ways and the methods and apparatus used change as new technologies and possibilities are developed. The conventional way until recently is to provide separate distribution systems for each service.

A more recent known form of apparatus is the provision of a cable based optical fibre distribution network which allows data to be transmitted from a broadcast location, along the supply network cables, typically over many miles, and then to those premises which are linked to the cable network and whose inhabitants wish to subscribe to the services provided via the network. This form of cable based network can be used to distribute television and radio programme services, telephony data services and ethernet or broadband internet services from the broadcast location to the premises with the telephone and Ethernet/broadband service data provided as a subcarrier along the cables along with the data for the television and radio service. While this form of service is known to be effective and provide relatively high speed delivery of the services to the end users, the system is dependent upon, and limited by, the extent and geographical reach of the cable network used to carry the services data. This therefore means that the availability of the system is limited to those geographical areas and premises therein which are connected to the cable network. This apparatus and method therefore cannot provide a distribution system which allows the provision of the radio, television, telephony and the ethernet services to all users over a common supply network as many users will never be able to connect to the network as a result of geographical, technical and/or expenditure constraints.

A further problem is that the cable based distribution network requires a large initial infrastructure investment in order to lay down and install the cable network from the broadcast location to each of the users. This, in practice, means that the cable based distribution network tends to only be provided in geographical "clusters" which means that other geographical areas are unlikely to ever receive the cable service.

An alternative manner of supplying television and radio services and data therefore is to use a wireless transmission system, most commonly a satellite broadcast system, which allows the delivery of television and radio programme data from a broadcast location to be received at any premises which is equipped with a suitable receiving antenna, with the data transmitted from one or more remote broadcast locations and relayed via one or more satellites to be received by the antenna at the user's premises. While the parties which provide this service commonly also offer telephony and ethernet and/or broadband services, these are typically carried over existing telephone service lines to the premises separately to the data which is received via the satellite broadcast system. This therefore means that while the provision of all of the services may be offered to the user, in practical terms the data for those services is provided by different distribution means to the user's premises. As a result the satellite service providers cannot offer a package in which the data for the services offered is carried over a common supply network.

In practice, the provision of the data for the different services using different media and supply systems acts to limit the effectiveness of supplying a "bundle" of different services to the end user and places the satellite service providers at a disadvantage with respect to those service providers using the cable based distribution network over which all of the data can be provided for all of the services which are offered.

EP1608106, US20030081619 and the paper entitled "Fiber-to-the-home services based on Wavelength Division multiplexing passive Optical Network" in the Journal of Lightwave Technology VOL.22 No 11 November 2004 all disclose the possibility of combining services onto a single distribution network where the data signals are received from different respective sources.

An aim of the present invention is therefore to provide a system and method whereby a plurality of services including any, or any combination, of television, radio, telephone and/or broadband/ethernet services can be provided to a user in which at least some of the data is transmitted to a headend of the system via satellite transmission and the data for, and hence the various services, can be provided to the user in a more efficient and reliable manner, preferably via a common supply network for at least part of the transfer of the data. A further aim is to be able to provide a number of the services to users who wish to receive the same without any geographical restriction as to whether or not the user can receive the services.

In a first aspect of the invention there is provided a system for the delivery of a plurality of services to at least one user location, said services including at least a television and radio service, a telephone service and a broadband or Ethernet service distributed via a common distribution network from a headend location to the at least one user location and the common distribution network transmits the data in an optical format along at least a portion thereof and characterised in that the data for the television and radio and the broadband or Ethernet services is provided to the headend location via a satellite transmission system using an antenna and Low Noise Block at each head end location and the data signals for the respective services are transmitted along the common distribution network at different optical wavelengths.

In one embodiment the common distribution network uses optical fibre cabling from the headend to the user location. Typically the common distribution network is used to provide the two or more services from the headend to a plurality of user locations. In one embodiment each of the services is made available to the one or more users from the headend via the common distribution network.

Typically the carrying of the data at different optical wavelengths is achieved by utilising frequency selective filters at the headend or at the point at which conversion into an optical format is located on the common distribution network to control the frequency ranges which are used. This effectively means that the data signals for the different frequencies are combined and stacked at the headend at different optical frequencies for the different services and transmitted in this manner along the common distribution network to the user location. In one embodiment the stack of optical wavelengths are 1550nm, 1310 nm and 1490nm respectively. This allows the required separation of the data signals whilst allowing the same to be accommodated on the available wavelength of the optical cable.

In one embodiment, at the headend the data signals for the television and radio service and the telephone and/or broadband services is transformed into an optical format and assigned to respective optical wavelengths for transmission via the optical fibre cables of the common distribution network to one, but more typically, a plurality of, user locations.

Typically, at each of the user locations there are provided means to allow the reformatting of the received data into a suitable format for each of the services and to allow the separate processing of the data signals for the respective services to be provided.

In one embodiment the data signals received at the user location in a first optical wavelength for the television and radio service are passed to a broadcast data receiver or set top box to allow the data signals to be processed and the audio and video generated from the data is then provided in the required format to allow the same to be displayed.

Typically the data signals received at the user location on other optical wavelengths from the common distribution network are passed to suitable apparatus to allow the provision of an Ethernet/broadband service and/or telephony apparatus to allow a telephone service to be provided at the user location.

In one embodiment the telephony apparatus which is used utilises Voice over Internet Protocol (VoIP) technology to provide the telephone service to the user.

Typically the data signals which are transmitted via the wireless transmission system, and indeed by cable, are transmitted from one or more broadcast locations which are remote from the headend. This therefore means that the headend is located intermediate the broadcast locations and the user locations such that the passage of the said data from the broadcast locations to the user locations is via the headend and thereby allows the bundling of the services and distribution of the same via a common distribution network from the head end to the user locations.

In one embodiment said services include a telephone service via a common distribution network from a headend location to the at least one user location and wherein said network transmits the data signals in an optical format along at least a portion thereof and the data signals for at least one of the services is provided to the headend location.

In one embodiment the wireless transmission system for the telephone service utilises any or any combination of satellite, Long Term Evolution (LTE), Wi-Fi, Microwave and/or line of sight data transmissions to provide the data to the head end location.

There is therefore provided a method of providing a plurality of data services including at least a television and radio service, a telephone service and a broadband/Ethernet service, to one or more user locations from a head end, said method comprising the steps of providing data signals for each of the services to the head end, reformatting the data signals into an optical format and transmitting the data signals to the one or more user locations from the headend via a common distribution network in the optical format and characterised in that the data signals for the television and radio and the broadband or Ethernet services is transmitted to the head end location via a satellite transmission system using an antenna and Low Noise Block at each head end location and the data signals for each of the services is allocated to a different optical wavelength for transmission along the common distribution network.

In one embodiment the data signals for the television and radio service are transmitted wirelessly to the head end from a broadcast location.

In one embodiment the data signals received at the user location in a first wavelength are reformatted, if required, from the optical format and passed to a broadcast data receiver to allow the same to be processed and the audio and video generated therefrom is displayed from apparatus connected to the broadcast data receiver to provide the television and radio service. Typically the data signals received at the user location at an optical wavelength different from that at which the data signals for the television and radio service is provided, are passed to apparatus to allow the provision of an Ethernet/broadband service or to telephony apparatus to allow a telephone service to be provided at the user location.

Typically data signals received at the user location at a first optical wavelength are passed to apparatus to allow a first service to be provided, data signals received at a second optical wavelength are passed to apparatus to allow a second service to be provided and data signals received at a third optical wavelength are passed to apparatus to allow a third service to be provided.

A specific embodiment of the invention is now described with reference to the accompanying Figures; wherein
Figure 1 illustrates a schematic illustration of the apparatus with which the invention of this application can be used;
Figure 2 illustrates, in a schematic manner, an example of a system and method in accordance with the invention; and
Figure 3 illustrates an alternative embodiment of the invention.

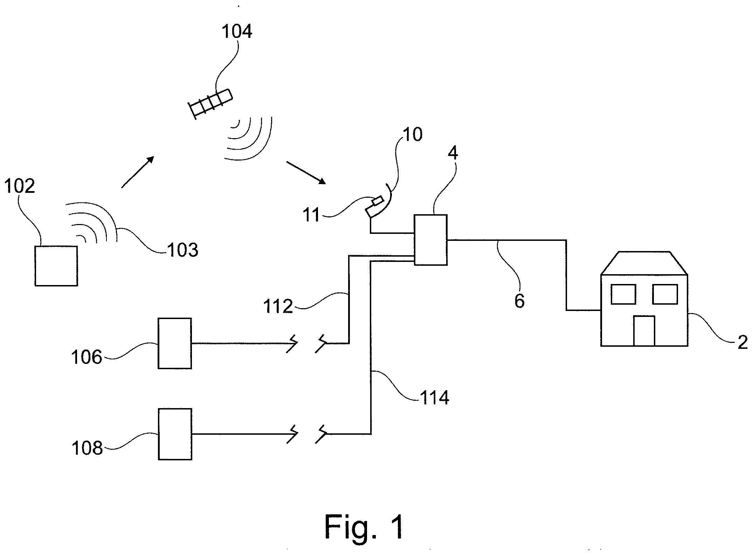

Figure 1 illustrates a data distribution apparatus of a type with which the invention as herein described can be used.

The apparatus comprises a first broadcast location 102 from which data signals 103 for at least one service, in this case a television and radio service, can be broadcast. The data signals are transmitted to one or more satellites 104 and, from those satellites, onto one or more receiving locations which are equipped with an antenna 10 and a low noise block 11 located therewith. The antenna and low noise block are located at or connected with a headend 4. Also provided to the headend 4 are data signals to allow a telephone service and an Ethernet/broadband service to be provided with the data signals being provided to the headend from remote locations 106,108 via the same cable or via cables 112, 114.

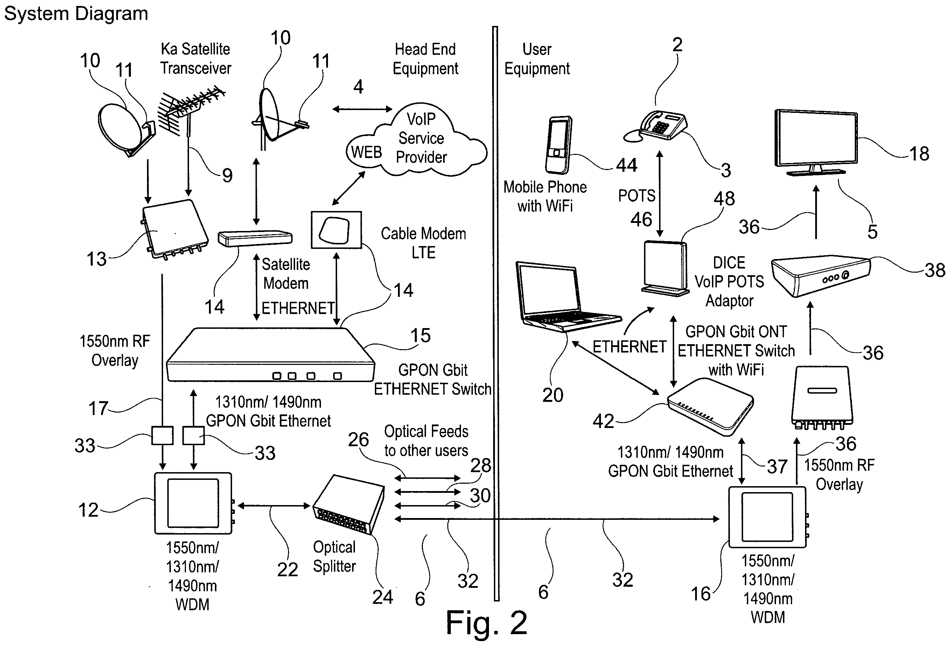

From the headend 4 there is provided a common distribution network 6 to one or a number of user locations 2 to allow the data signals for the different services to be provided to the user location in a manner which is described in more details with regard to Figure 2. It should be noted that although one user location is shown, in other embodiments a plurality of user locations can be provided. Furthermore the headend can be provided within for example, a block of apartments to allow user locations in the form of each apartment to be supplied or alternatively may be provided to supply a housing estate with each user location being a house in the housing estate.

In accordance with the example now described in Figure 2 there is provided a user location 2 at which the user desires to receive a telephone service 3, television and radio service 5 and an ethernet/ broadband service 7 and wants to receive the services from a single common supplier and via a common distribution network 6.

In accordance with the invention, the data for the various services is collated at the "head end" 4 which is the term given to the apparatus which is provided to receive the required data from the remote broadcast and transmission data sources such as 102,106,108. The head end 4 can be provided at each of the user locations where, for example, the user location is a single residential premises or can be provided to receive data for subsequent distribution to a plurality of user locations such as, for example, for use in a block of apartments to allow data to be distributed to each of the apartments from a common head end, or for use in an estate of premises, each of which can be served by a common head end.

Indeed the system in accordance with the invention can be used to supply any group of user locations and users therein with the services even when the data signals for at least some of the services is broadcast via wireless transmissions, such as by satellite. Thus, it should be appreciated that the transmission, and hence provision, of the services can be to any potential user and without geographical restriction caused by the unavailability of a distribution infrastructure as is conventionally the case.

In the embodiment illustrated, for ease of illustration, only one user location 2 is shown as being supplied by the common distribution network 6 and head end 4 but it should be appreciated that the common distribution network 6 can be expanded for each of a number of user locations. At the head end 4 there is provided, or the head end is provided in connection with, the antenna 10 and LNB 11 such as that, in this embodiment, for receiving the data signals 103 broadcast via the satellite broadcast and transmission system. The antenna 10 is provided to receive transmitted data for the television and radio service.

An antenna 9 for receiving terrestrial digital data signals for a further television and/or radio service may also be provided. Apparatus in the form of a cable modem and /or internet VoIP service provider 14 for receiving and transmitting data signals is provided to allow the receipt and transmission of data, i.e. the passage of data in both directions, through the headend 4 in order to provide the telephone service and Ethernet service via switching apparatus 15.

At the headend the received data signals are converted via optical conversion means including a laser to allow the data signals to be transmitted onwardly from the head end to the user location 2. This is achieved by the provision of filters at the conversion means 33 to allocate the data signals for each particular service to a particular optical wavelength such that, for example, the data signals for the television service are allocated an optical wavelength at or around 1550nm and, in this embodiment, the data signals are passed to a wavelength division multiplexing (WDM) converter 12. Wavelength-division multiplexing allows the multiplexing of the number of optical format carrier signals onto a single optical fiber cable and enables bidirectional communications.

For the data signals from the terrestrial antenna 9 this can be passed to a combiner 13 to allow the data signals therefrom to be combined with the data signals from the satellite antenna 10 so that the combined television and radio service data signals 17 are passed to the WDM 12.

The data signals for the telephone and/or broadband/ Ethernet services, which data is provided for the receipt and transmission, is passed from the switch 15 to the optical converter 33 and converted into an optical format at the appropriate frequencies and passed to the WDM 12 to be multiplexed onto the carrier 22 and stacked along with the television service data signals in terms of optical wavelength with, in this example, stacking of the respective optical wavelengths at 1550nm, 1310 nm and 1490nm respectively.

All of the received data signals, at least some of which are typically initially received in the RF mode, is passed to be carried in the optical mode 22 and passed to an optical splitter 24. The splitter provides a plurality of paths 26, 28,30,32 each of which allow the passage of the optical data to one of a plurality of user locations 2, one of which is shown and which is supplied via optical path 32.

Thus all the data signals for the required services in combination is carried via the common distribution network 32 in an optical format, and at differing optical wavelengths, to the user location 2.

At the user location 2, a WDM converter 16 is provided and which demultiplexes the data signals and if necessary conversion means (not shown) are provided to allow the conversion of the data signals from the optical format and to the required frequency bands so that the data signals are in suitable formats to allow the data signals to be processed by the respective service apparatus at the user location 2. The data for the television and radio service is passed from the WDM 16 via path 36 to a broadcast data receiver 38 and the data is processed in the normal format to allow the video and audio generated therefrom to be displayed and emitted, in this case, via the display screen and speakers of the television 18.

The data for the telephone and Ethernet/broadband services is passed from the WDM 16 via path 37 to an Ethernet switch apparatus 42 which allows the passage of data between the Ethernet/broadband user devices such as laptop 20 and mobile phone 44, and also allows the provision of a telephone service via VoIP adaptor apparatus 48 and plain old telephone system (POTS) 46 and telephone handset 50, which allows a conventional cable based telephone service to be provided via the ethernet service. The WDM's 16 and 12 can also be used to allow the passage of data signals in the opposite direction from the user location 2 to the headend to allow the broadband/Ethernet and/or telephone and/or television and radio services to interact with the remote broadcast locations via the common distribution network.

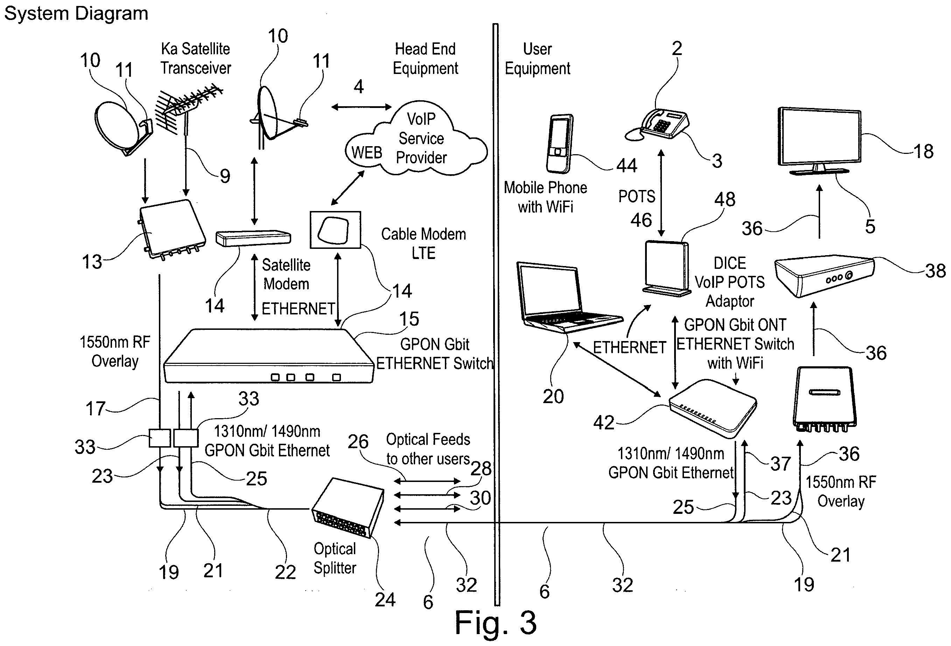

Figure 3 illustrates an alternative embodiment of the invention to that shown in Figure 2. However, the components of Figures 2 and 3 which are common are referred to by the same reference numerals for ease of illustration. In this embodiment, the data signals for the respective services are received at the head end in the same manner as described in Figure 2. However in this case the optical cable which is used for the common distribution network 6 is a multi core, in this case a 4-core, cable which effectively means that there are four separate optical data signal paths along the cable. In this case there is no need to provide the WDM devices 12 and 16 of Figure 2 as no multiplexing of the signals is required onto a single cable as, in this embodiment two of the cores 19,21 of the cable are connected directly so as to carry the data signals 17 for the television and radio service, one of the cores 23 is connected to carry data signals for the telephone and broadband/Ethernet services from the headend to the user location and the core 25 is connected to carry the data signals for the telephone and broadband/Ethernet services from the user location to the Headend. The reverse process is performed at the user location 2 where the two cores 19, 21 are connected, via conversion means from optical to RF format if required, to provide the data service 36 and the cores 23 and 25 provide the telephone and broadband/Ethernet service data signals 37, again via conversion means if required. The data signals for the different services can still be carried at stacked frequencies in this case.

It should also be appreciated that it may not be necessary to convert some or any of the data signals from the common distribution network received at the user location in an optical format back into other formats and, instead, the data which is received can be processed and used in the optical format by the apparatus at the user locations in an optical format.

The present invention therefore provides the necessary data, at least some of which has been received at the headend via a wireless transmission system, to allow a number of services to be provided to a user at a location and allows the necessary data signals to all be provided at the user location via a single, common, supply network and without any geographical restriction on the availability of the services. This also allows the combination of services to be offered to users at the time of installation of the apparatus to receive the wireless data transmission as an extra service. This is turn represents the possibility of additional revenue streams being generated, both to the service providers, and the installers of the apparatus.

## Claims

1. A system for the delivery of a plurality of services to at least one user location (2), said services including at least a television and radio service (5), a telephone service and a broadband or Ethernet service (7) distributed via a common distribution network (6) from a headend location (4) to the at least one user location wherein the common distribution network is adapted to transmit the data in an optical format along at least a portion thereof and **characterised by** comprising an antenna (10) and Low Noise Block (11) at each head end location for providing the data for the television and radio and the broadband or Ethernet services to the headend location via a satellite transmission system and by comprising optical transceiver equipment adapted to transmit the data signals for the respective services along the common distribution network at different optical wavelengths.

2. A system according to claim 1 wherein all of the data signals for all of the services are transmitted to the headend via a wireless transmission system.

3. A system according to claim 1 wherein the common distribution network is used to provide the three or more services to a plurality of user locations.

4. A system according to claim 1 wherein each of the services is made available to the one or more users from the headend via the common distribution network.

5. A system according to claim 1 wherein the different optical wavelengths are stacked at the headend or at the point at which conversion into an optical format is located on the common distribution network, to allow the transmission of the same along the common distribution network.

6. A system according to claim 5 wherein frequency selective filters are provided at the headend or at the point at which conversion into an optical format is located on the common distribution network to select and place the data signals at the wavelengths which are used for the different services.

7. A system according to claim 1 wherein means are provided to allow the data signals received at the headend for the services to be transformed into an optical format and assigned to respective optical wavelengths for transmission via optical fibre cable forming the common distribution network to one, or a plurality of, user locations.

8. A system according to claim 1 wherein at each of the user locations there are provided means to allow the reformatting of the optical data signals into the appropriate form to allow subsequent processing of the data to provide the respective services at the user location.

9. A system according to claim 8 wherein data signals received for the television and radio service are passed to a broadcast data receiver to allow the same to be processed and the audio and video generated therefrom is displayed from apparatus connected to the broadcast data receiver.

10. A system according to claim 1 wherein the headend is located intermediate the passage of the said data from the broadcast location to the user location.

11. A method of providing a plurality of data services including at least a television and radio service (5), a telephone service and a broadband/Ethernet service (7), to one or more user locations (2) from a head end (4), said method comprising the steps of providing data signals for each of the services to the head end (4), reformatting the data signals into an optical format and transmitting the data signals to the one or more user locations from the headend via a common distribution network (6) in the optical format and **characterised in that** the data signals for the television and radio and the broadband or Ethernet services is transmitted to the head end location via a satellite transmission system using an antenna (10) and Low Noise Block (11) at each head end location and the data signals for each of the services is allocated to a different optical wavelength for transmission along the common distribution network.

12. A method according to claim 11 wherein the data signals for the television and radio service are transmitted to the head end from a broadcast location.

13. A method according to claim 11 wherein data signals received at the user location in a first wavelength are reformatted, if required, from the optical format and passed to a broadcast data receiver to allow the same to be processed and the audio and video generated therefrom is displayed from apparatus connected to the broadcast data receiver to provide the television and radio service.

14. A method according to claim 13 wherein data signals received at the user location at an optical wavelength different from that at which the data signals for the television and radio service is provided are passed to apparatus to allow the provision of an Ethernet service or to telephony apparatus to allow a telephone service to be provided at the user location.

15. A method according to claim 11 wherein data signals received at the user location at a first optical wavelength are passed to apparatus to allow a first service to be provided, data signals received at a second optical wavelength are passed to apparatus to allow a second service to be provided and data signals received at a third optical wavelength are passed to apparatus to allow a third service to be provided.

## Patentansprüche

1. System zur Bereitstellung von mehreren Diensten zu wenigstens einem Benutzerstandort (2), wobei die genannten Dienste wenigstens einen Fernseh- und Radiodienst (5), einen Telefondienst und einen Broadband- oder Ethernet-Dienst (7) beinhalten, die über ein gemeinsames Verteilungsnetz (6) von einer Kopfstelle (4) zu dem wenigstens einen Benutzerstandort verteilt werden, wobei das gemeinsame Verteilungsnetz zum Übertragen der Daten in einem optischen Format an wenigstens einem Teil davon entlang ausgeführt ist, und **dadurch gekennzeichnet, dass** es an jeder Kopfstelle eine Antenne (10) und einen rauscharmen Signalumsetzer (11) umfasst zum Versorgen der Kopfstelle über ein Satellitenübertragungssystem mit den Daten für die Fernseh- und Radio- und die Broadband- oder Ethernet-Dienste und dass es eine optische Transceiver-Ausrüstung umfasst, die zum Übertragen der Datensignale für die jeweiligen Dienste am gemeinsamen Verteilungsnetz entlang mit verschiedenen optischen Wellenlängen ausgeführt ist.

2. System nach Anspruch 1, wobei alle der Datensignale für alle der Dienste über ein drahtloses Übertragungssystem zur Kopfstelle übertragen werden.

3. System nach Anspruch 1, wobei das gemeinsame Verteilungsnetz zum Versorgen von mehreren Benutzerstandorten mit den drei oder mehr Diensten verwendet wird.

4. System nach Anspruch 1, wobei jeder der Dienste dem einem oder den mehr Benutzern von der Kopfstelle über das gemeinsame Verteilungsnetz verfügbar gemacht wird.

5. System nach Anspruch 1, wobei die verschiedenen optischen Wellenlängen an der Kopfstelle oder an dem Punkt, an dem die Umwandlung in ein optisches Format am gemeinsamen Verteilungsnetz liegt, gestapelt sind, um die Übertragung derselben am gemeinsamen Verteilungsnetz entlang zu ermöglichen.

6. System nach Anspruch 5, wobei frequenzselektive Filter an der Kopfstelle oder an dem Punkt, an dem die Umwandlung in ein optisches Format am gemeinsamen Verteilungsnetz liegt, zum Auswählen und Setzen der Datensignale auf den bzw. die Wellenlängen, die für die verschiedenen Dienste verwendet werden.

7. System nach Anspruch 1, wobei Mittel bereitgestellt werden zum Ermöglichen, dass die an der Kopfstelle empfangenen Datensignale für die Dienste in ein optisches Format umgewandelt werden und jeweiligen optischen Wellenlängen zugeordnet werden zur Übertragung über Lichtleitkabel, die das gemeinsame Verteilungsnetz bilden, zu einem oder mehreren Benutzerstandorten.

8. System nach Anspruch 1, wobei an jedem der Benutzerstandorte Mittel bereitgestellt sind zum Ermöglichen des Umformatierens der optischen Datensignale in die zutreffende Form, um nachfolgendes Verarbeiten der Daten zum Bereitstellen der jeweiligen Dienste am Benutzerstandort zu ermöglichen.

9. System nach Anspruch 8, wobei für den Fernseh- und Radiodienst empfangene Datensignale an einen Rundfunkdatenempfänger weitergeleitet werden, damit dieselben verarbeitet und das daraus erzeugte Audio und Video von einer mit dem Rundfunkdatenempfänger verbundenen Vorrichtung angezeigt werden.

10. System nach Anspruch 1, wobei die Kopfstelle an einem Punkt zwischen der Weiterleitung der genannten Daten von der Rundfunkstelle zum Benutzerstandort liegt.

11. Verfahren zur Bereitstellung von mehreren Datendiensten, die wenigstens einen Fernseh- und Radiodienst (5), einen Telefondienst und einen Broadband-/Ethernet-Dienst (7) beinhalten, von einer Kopfstelle (4) zu einem oder mehr Benutzerstandorten (2), wobei das genannte Verfahren die folgenden Schritte aufweist: Bereitstellen von Datensignalen für jeden der Dienste zur Kopfstelle (4), Umformatieren der Datensignale in ein optisches Format und Übertragen der Datensignale von der Kopfstelle über ein gemeinsames Verteilungsnetz (6) in dem optischen Format zu dem einen oder den mehr Benutzerstandorten, und **dadurch gekennzeichnet, dass** die Datensignale für die Fernseh- und Radio- und die Broadband- oder Ethernet-Dienste über ein Satellitenübertragungssystem unter Verwendung einer Antenne (10) und eines rauscharmen Signalumsetzers (11) an jedem Kopfstellenstandort übertragen werden und die Datensignale für jeden der Dienste einer anderen optischen Wellenlänge zum Übertragen am gemeinsamen Verteilungsnetz entlang zugeordnet sind.

12. Verfahren nach Anspruch 11, wobei die Datensignale für den Fernseh- und Radiodienst von einer Rundfunkstelle zur Kopfstelle übertragen werden.

13. Verfahren nach Anspruch 11, wobei die am Benutzerstandort in einer ersten Wellenlänge empfangenen Datensignale, falls erforderlich, aus dem optischen Format umformatiert und an einen Rundfunkdatenempfänger weitergeleitet werden, damit dieselben verarbeitet werden können, und das daraus erzeugte Audio und Video aus einer mit dem Rundfunkdatenempfänger verbundenen Vorrichtung zur Bereitstellung des Fernseh- und Radiodienstes angezeigt werden können.

14. Verfahren nach Anspruch 13, wobei Datensignale, die am Benutzerstandort mit einer optischen Wellenlänge empfangen werden, die von der verschieden ist, mit der die Datensignale für den Fernseh- und Radiodienst bereitgestellt werden, an eine Vorrichtung zum Ermöglichen der Bereitstellung eines Ethernet-Dienstes oder an eine Telefonievorrichtung zum Ermöglichen der Bereitstellung eines Telefondienstes am Benutzerstandort weitergeleitet werden.

15. Verfahren nach Anspruch 11, wobei Datensignale, die am Benutzerstandort mit einer ersten optischen Wellenlänge empfangen werden, an eine Vorrichtung zum Ermöglichen der Bereitstellung eines ersten Dienstes weitergeleitet werden, Datensignale, die mit einer zweiten optischen Wellenlänge empfangen werden, an eine Vorrichtung zum Ermöglichen der Bereitstellung eines zweiten Dienstes weitergeleitet werden, und Datensignale, die mit einer dritten optischen Wellenlänge empfangen werden, an eine Vorrichtung zum Ermöglichen der Bereitstellung eines dritten Dienstes weitergeleitet werden.

## Revendications

1. Système pour la délivrance d'une pluralité de services à au moins une localisation d'utilisateur (2), lesdits services incluant au moins un service de télévision et de radio (5), un service de téléphone et un service à large bande ou Ethernet (7) distribué via un réseau de distribution commun (6) à partir d'une localisation tête de réseau (4) jusqu'à cette au moins une localisation d'utilisateur, cas dans lequel le réseau de distribution commun est conçu pour transmettre les données dans un format optique le long d'au moins une portion de celui-ci, et **caractérisé par le fait qu'**il comprend une antenne (10) et un bloc à faible bruit (11) au niveau de chaque localisation tête de réseau pour fournir les données destinées aux services de télévision et de radio et de large bande ou Ethernet à la localisation tête de réseau via un système de transmission satellitaire et **par le fait qu'**il comprend un équipement émetteur-récepteur optique conçu pour transmettre les signaux de données pour les services respectifs le long du réseau de distribution commun à des longueurs d'onde optiques différentes.

2. Système selon la revendication 1, tous les signaux de données pour tous les services étant transmis à la tête de réseau via un système de transmission sans fil.

3. Système selon la revendication 1, le réseau de distribution commun étant utilisé pour fournir les trois ou plusieurs services à une pluralité de localisations d'utilisateur.

4. Système selon la revendication 1, chacun des services étant mis à la disposition de cet ou ces utilisateurs à partir de la tête de réseau via le réseau de distribution commun.

5. Système selon la revendication 1, les longueurs d'onde optiques différentes étant empilées au niveau de la tête de réseau ou au niveau du point auquel la conversion en un format optique est localisée sur le réseau de distribution commun, afin de permettre la transmission de celles-ci le long du réseau de distribution commun.

6. Système selon la revendication 5, des filtres sélectifs de fréquence étant prévus au niveau de la tête de réseau ou au niveau du point auquel la conversion en un format optique est localisée sur le réseau de distribution commun, afin de sélectionner et de placer les signaux de données aux longueurs d'onde qui sont utilisées pour les différents services.

7. Système selon la revendication 1, des moyens étant prévus pour permettre aux signaux de données reçus au niveau de la tête de réseau pour les services d'être transformés en un format optique et affectés à des longueurs d'onde optiques respectives en vue d'une transmission via un câble à fibres optiques formant le réseau de distribution commun vers une, ou une pluralité de, localisation(s) d'utilisateur.

8. Système selon la revendication 1, des moyens étant prévus au niveau de chacune des localisations d'utilisateur pour permettre le re-formatage des signaux de données optiques en une forme appropriée pour permettre un traitement ultérieur des données afin de fournir les services respectifs au niveau de la localisation d'utilisateur.

9. Système selon la revendication 8, des signaux de données reçus pour le service de télévision et de radio étant passés à un récepteur de données diffusées pour permettre à celles-ci d'être traitées, et l'audio et la vidéo générées depuis celles-ci étant affichées à partir d'un appareil connecté au récepteur de données diffusées.

10. Système selon la revendication 1, la tête de réseau étant localisée entre le passage desdites données à partir de la localisation de diffusion jusqu'à la localisation d'utilisateur.

11. Procédé servant à fournir une pluralité de services de données incluant au moins un service de télévision et de radio (5), un service de téléphone et un service à large bande/Ethernet (7), à une ou plusieurs localisations d'utilisateur (2) à partir d'une tête de réseau (4), ledit procédé comprenant les étapes consistant à fournir des signaux de données pour chacun des services à la tête de réseau (4), re-formater les signaux de données en un format optique et transmettre les signaux de données vers cette ou ces localisations d'utilisateur à partir de la tête de réseau via un réseau de distribution commun (6) dans le format optique, et **caractérisé en ce que** les signaux de données pour les services de télévision et de radio et de large bande ou Ethernet sont transmis à la localisation tête de réseau via un système de transmission satellitaire utilisant une antenne (10) et un bloc à faible bruit (11) au niveau de chaque localisation tête de réseau et les signaux de données pour chacun des services sont alloués à une longueur d'onde optique différente en vue d'une transmission le long du réseau de distribution commun.

12. Procédé selon la revendication 11, les signaux de données pour le service de télévision et de radio étant transmis à la tête de réseau à partir d'une localisation de diffusion.

13. Procédé selon la revendication 11, des signaux de données reçus au niveau de la localisation d'utilisateur dans une première longueur d'onde étant re-formatés, si nécessaire, à partir du format optique et passés à un récepteur de données diffusées pour permettre à celles-ci d'être traitées, et l'audio et la vidéo générées depuis celles-ci étant affichées à partir d'un appareil connecté au récepteur de données diffusées afin de fournir le service de télévision et de radio.

14. Procédé selon la revendication 13, des signaux de données reçus au niveau de la localisation d'utilisateur à une longueur d'onde optique différente de celle à laquelle les signaux de données pour le service de télévision et de radio est fourni étant passés à un appareil pour permettre la prestation d'un service Ethernet ou à un appareil de téléphonie pour permettre à un service de téléphone d'être fourni au niveau de la localisation d'utilisateur.

15. Procédé selon la revendication 11, des signaux de données reçus au niveau de la localisation d'utilisateur à une première longueur d'onde optique étant passés à un appareil pour permettre à un premier service d'être fourni, des signaux de données reçus à une deuxième longueur d'onde optique étant passés à un appareil pour permettre à un deuxième service d'être fourni, et des signaux de données reçus à une troisième longueur d'onde optique étant passés à un appareil pour permettre à un troisième service d'être fourni.
